# EUROPÄISCHE PATENTANMELDUNG

(11) **EP 0 563 675 A2**
(43) Veröffentlichungstag der Anmeldung: **06.10.1993**
(21) Anmeldenummer: 93104254.3
(22) Anmeldetag: 16.03.1993
(51) Int. Cl.: G01R 31/28, H04M 3/30

(54) **Prüfeinrichtung zum Prüfen einer Schaltungsanordnung**

(30) Priorität: 31.03.1992 DE 4210619
(71) Anmelder: SIEMENS AKTIENGESELLSCHAFT, D-80333 München (DE)
(72) Erfinder: Gnan, Günther, Dipl.-Ing., W-8038 Gröbenzell (DE); Kaiser, Wolfgang, Dipl.-Ing. (FH), W-8228 Feilassing (DE); Preiss, Frank, Dipl.-Phys., W-8080 Fürstenfeldbruck (DE); Schmutzler, Werner, W-8080 Fürstenfeldbruck (DE)

(57) **Zusammenfassung**

Prüfeinrichtungen zum Prüfen von Teilnehmeranschlußschaltungen sollen bezüglich unterschiedlicher Prüfanforderungen möglichst flexibel sein.
Bei der vorliegenden Erfindung wird dies durch einen Signalprozessor (DSP) erreicht, der den digitalen Teil der Sende- und Meßschaltung der Prüfeinrichtung (PEQ) realisiert.

## Beschreibung

Bei der Entstörung von Teilnehmeranschlüssen werden in vermittlungsstellen Prüfeinrichtungen zur Lokalisierung der Fehlerstellen eingesetzt. Solche Prüfeinrichtungen bein- halten Sende- und Meßschaltungen, die Prüfsignale zur Teilnehmerleitungsseite oder über einen PCM-Bus zur digitalen Seite der Teilnehmeranschlußschaltungen senden und von dort empfangen können.

Für die Übertragung der Prüfsignale über den PCM-Bus muß dabei nach dem a-Gesetz oder my-Gesetz codiert werden können. In der Meßschaltung einer derartigen Prüfeinrichtung müssen des weiteren verschiedene Bewertungsfilter zuschaltbar sein, die das Meßergebnis entsprechend den Wünschen des Betreibers qualifizieren.

Für die Übertragung der Prüfsignale über den PCM-Bus mit der Codierung nach a- oder my-Gesetz wurden bisher unterschiedliche Firmware-Versionen eingesetzt. Die genannten Bewertungsfilter wurden bisher als Hardware realisiert. Konnte mit dieser Lösung eine Meßanforderung nicht mehr erfüllt werden, so wurde eine Variante entwickelt.

Der Erfindung liegt das Problem zugrunde, eine Prüfeinrichtung zum Prüfen einer Schaltungsanordnung anzugeben, die bezüglich der genannten verschiedenen Anforderungen flexibel ist.

Dieses Problem wird durch eine Prüfeinrichtung gemäß Anspruch 1 gelöst.

Mit Hilfe des Signalprozessors können je nach Anforderung des Betreibers der Vermittlungsstelle unterschiedlichste Prüfsignale gesendet und empfangen werden.

Eine Ausführungsform der Erfindung ist durch Anspruch 2 angegeben. Diese Ausführungsform besitzt insbesondere den Vorteil, daß bei einem Wechsel der Firmware nur ein Baustein, nämlich das zentrale EPROM ausgetauscht werden muß. Des weiteren entfällt durch das zentrale EPROM ein separates EPROM für den Signalprozessor. Dies ist insbesondere deshalb vorteilhaft, weil der Signalprozessor wegen seiner hohen Taktrate ein schnelles und daher teures EPROM benötigen würde.

Im folgenden wird eine Ausführungsform der Erfindung anhand der Zeichnung näher erläutert.

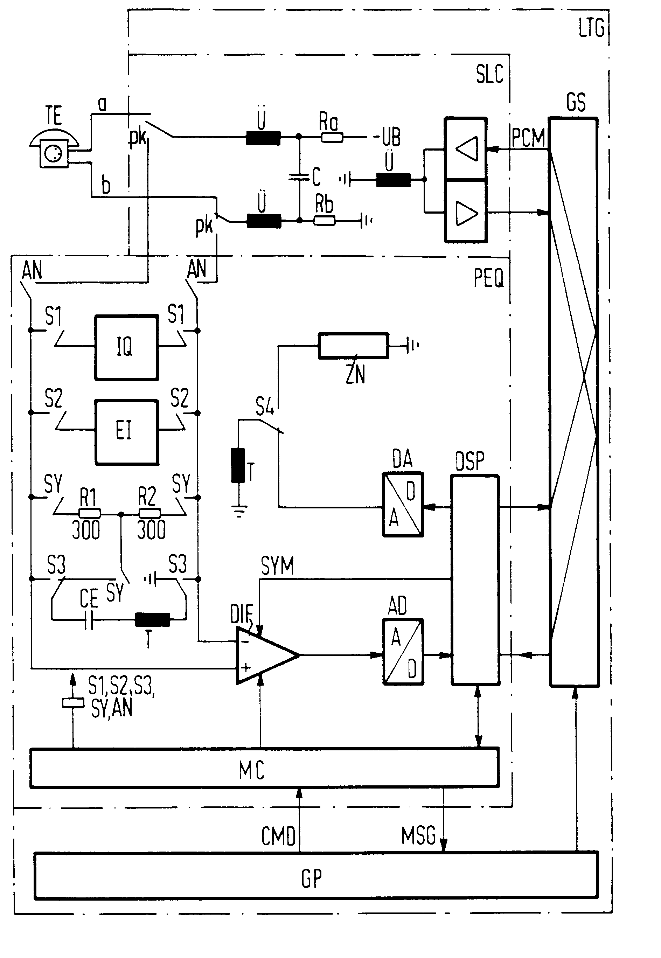

FIG 1 zeigt die Einbettung einer Prüfeinrichtung PEQ zur Prüfung einer Teilnehmerschaltung SLC innerhalb einer Anschlußgruppe LTG eines Vermittlungssystems. Die Teilnehmerschaltung SLC umfaßt vereinfacht dargestellt Speisewiderstände Ra und Rb, über die eine Gleichspannung UB eingespeist wird, einen Übertrager Ü, der die Sprechwechselspannung von der Teilnehmeranschlußleitung a/b zum PCM-Interface IN und umgekehrt überträgt und einen Kondensator C, der den Wechselstromkreis schließt. Das PCM-Interface bildet dabei den Übergang von der analogen Übertragungsseite zur digitalen Übertragungsseite. Auf der digitalen Übertragungsseite ist die Sprechwechselspannung in ihre gehenden und kommenden Anteile getrennt und nach dem PCM-Verfahren kodiert. Zu Prüfzwecken ist die digitale Seite der Teilnehmerschaltung über eine Koppeleinrichtung GS mit der Prüfeinrichtung verbindbar. Die analoge Seite der Teilnehmerschaltung ist zu Prüfzwecken durch Prüfkopplerkontakte pk mit der Prüfeinrichtung verbindbar.

Die Prüfeinrichtung umfaßt verschiedene Relais, eine Konstantstromsenke IQ, einen Eichgenerator EI, eine symmetrische Toneinspeiseschaltung, eine Leitungsnachbildung ZN, einen Differenzverstärker DIF, einen Signalprozessor DSP mit vorgeschalteten Digital/Analog-Wandler DA sowie Analog/Digital-Wandler AD, und einen Mikrocomputer MC.

Die genannte symmetrische Toneinspeiseschaltung umfaßt Einspeisewiderstände R1 und R2, in deren Mitte hinter einem Kondensator C ein Sendeübertrager T angeschaltet ist. Der zweite Teil des Sendeübertragers T ist mit dem Digital/ Analog-Wandler des Signalprozessors verbindbar.

Bei den genannten Relais der Prüfeinrichtung handelt es sich um ein Relais AN zur Anschaltung der Prüfeinrichtung an den Prüfling (Teilnehmerschaltung), ein Relais S1 zur Anschaltung der Konstantstromsenke, ein Relais S2 zur Anschaltung des Eichgenerators EI,ein Relais S3 zur Anschaltung des Sendeübertragers E, ein Relais S4 zur Umschaltung des Sendeübertragers T vom Digital/Analog-Wandler auf die Leitungsnachbildung ZN und ein Relais SY zur Anschaltung der symmetrischen Toneinspeiseschaltung.

Die Leitungsnachbildung ZN dient als Leitungsabschluß bei bestimmten Messungen, z.B. bei der Messung der Gabelübergangsdämpfung.

Der Signalprozessor DSP realisiert sowohl den wesentlichen Teil einer Sendeschaltung zum Senden von Prüfsignalen, als auch den wesentlichen Teil einer Meßschaltung zum Messen von Meßsignalen und kann sowohl an die Analogseite der Teilnehmerschaltung SLC als auch über eine Koppeleinrichtung GS an die digitale Seite der Teilnehmerschaltung SLC angeschaltet werden. Für die Anschaltung an die analoge Seite der Teilnehmerschaltung sind dem Signalprozessor zum Senden ein Digital/Analog-Wandler DA und zum Empfangen ein Analog/Digital- Wandler DA vorgeschaltet.

Die analoge Meßschaltung der Prüfeinrichtung wird vom Signalprozessor, dem Analog/Digital-Wandler AD und dem Differenzverstärker DIF gebildet. Der Differenzverstärker koppelt hierbei den Wechselspannungsanteil der Spannung zwischen a- und b-Ader aus und führt ihn über den Analog/Digital-Wandler dem signalprozessor zur Auswertung zu.

Die analoge Sendeschaltung wird vom Signalprozessor, dem Digital/Analog-Wandler DA und dem Sendeübertrager T gebildet. Der Signalprozessor erzeugt ein Signal in digitaler Form, welches mit Hilfe des Digital/Analog-Wandlers in analoge Schwingungen umgewandelt wird und über den Sendeübertrager auf die Teilnehmeranschlußleitung eingespeist wird.

Die analoge sendeschaltung kann zur Überwachung der internen Funktionstüchtigkeit der Prüfeinrichtung mit der analogen Meßschaltung in einem Eigenprüfungsmodus zusammengeschaltet werden.

Der Signalprozessor DSP mißt in seinem Empfangsteil den Effektivwert von Wechselspannungen und gibt diesen als Pegelwert in dB an den Mikrocomputer MC weiter.

Die Wechselspannungen können von der Analogseite der Teilnehmerschaltung über den Analog-Digital-Wandler oder von der Digitalseite der Teilnehmerschaltung über die Koppeleinrichtung GS empfangen werden. Bei Bedarf können digitale Bewertungsfilter zugeschaltet werden, die das Meßergebnis entsprechend qualifizieren. Zur Realisierung dieser Bewertungsfilter ist in der Software für den Signalprozessor ein Prozeß implementiert, der Werte einer komplexen Übertragungsfunktion berechnet. Durch Laden von verschiedenen Koeffizienten in die Übertragungsfunktion werden je nach Meßaufgabe unterschiedliche Filtercharakteristiken erzeugt. Die von der Analogseite gemessenen Effektivwerte werden mit einem Meßkorrekturfaktor multipliziert, der die Toleranzen der analogen Bauteile berücksichtigt.

Der signalprozessor erzeugt in seinem Sendeteil Prüfsignale, deren Frequenz und Pegel einstellbar sind. Sie können analog über den Digital/Analog-Wandler oder digital über den PCM-Bus zum Prüfling gesendet werden. Die zum Digital/Analog-Wandler gesendeten Prüfsignale werden mit einem Sendekorrekturfaktor multipliziert, der die Toleranzen der analogen Bauteile der Sendeschaltung berücksichtigt.

Zur Realisierung von Sinusschwingungen für die analoge Sendeseite ist in der Software für den Signalprozessor ein Prozeß implementiert, der Amplitudenwerte über eine Potenzreihe berechnet. Dies ergibt Momentanwerte eines Sinussignals der vorgegebenen Frequenz. Durch das Abtastverfahren treten bei der Umwandlung in eine analoge Schwingung frequenzabhängige Verzerrungen auf. Deshalb wird in einem weiteren Rechenschritt der Amplitudenwert korrigiert.

Darüber hinaus wird durch die Software für den Signalprozessor auch die unterschiedliche Codierung bzw. Decodierung der vom Signalprozessor gesendeten bzw. empfangenen Signale (a- oder my-Gesetz) realisiert.

Der Mikrocomputer MC erhält von der Prüfsoftware der Gruppensteuerung GP über entsprechende Kommandos CMD Meßaufträge und sendet über entsprechende Meldungen MSG die Meßergebnisse wiederum an die Gruppensteuerung der Anschlußgruppe LTG zurück. Insbesondere werden dem Mikrocomputer durch die genannten Kommandos CMD die Art der Codierung bzw. Decodierung der vom Signalprozessor zu sendenden bzw. zu empfangenden Signale sowie der zu verwendende Bewertungsfilter mitgeteilt. Zum Messen stellt der Mikrocomputer die Relais S1, S2, S3, S4, Sy und AN der Prüfeinrichtung PEQ entsprechend ein und aktiviert den Signalprozessor DSP. Dabei wird die zum Messen vom Signalprozessor benötigte Software vom Mikrocomputer in den Arbeitsspeicher des Signalprozessors geladen. Dadurch wird es ermöglicht, daß das Steuerprogramm für den Mikrocomputer und die Signalprozeß-Software für den Signalprozessor in einem zentralen EPROM untergebracht werden können. Bei einem Wechsel der Firmware muß daher nur ein Baustein ausgetauscht werden.

Zudem verringern sich die Kosten, da der Signalprozessor wegen seiner hohen Taktrate schnelle und daher teure EPROM benötigen würde.

## Patentansprüche

1. Prüfeinrichtung zum Prüfen einer Schaltungsanordnung, die folgende Merkmale umfaßt:
a) eine Sendeschaltung zum Senden von Prüfsignalen zu der Schaltungsanordnung,
b) eine Meßschaltung zum Empfangen von durch die Prüfsignale bedingten Antwortsignalen von der Schaltungsanordnung,
c) Schaltmittel zum Anschalten der Sende- und Meßschaltung an die Schaltungsanordnung, **gekennzeichnet** durch
d) einen Signalprozessor (DSP), der den digitalen Teil der Sende- und Meßschaltung bildet,
e) einen Mikrocomputer (MC), der die Prüfeinrichtung steuert.

2. Prüfeinrichtung gemäß Anspruch 1,
**gekennzeichnet** durch
a) ein zentrales EPROM, in dem die Programme für den Mikrocomputer und den Signalprozessor abgespeichert sind, wobei
b) der Signalprozessor über den Mikrocomputer mit entsprechenden Programmen aus dem zentralen EPROM versorgt wird.

3. Prüfeinrichtung gemäß Anspruch 1,
**dadurch gekennzeichnet,**
daß der Signalprozessor die Art der Codierung bzw. Decodierung der von ihm gesendeten bzw. empfangenen Signale durch entsprechende Programme realisiert, die ihm über den Mikrocomputer zugesandt werden.

4. Prüfeinrichtung gemäß Anspruch 1,
**gekennzeichnet** durch Bewertungsfilter zur Qualifizierung der von der Meßschaltung empfangenen Signale, wobei die Bewertungsfilter durch entsprechende Programme des Signalprozessors realisiert sind, die dem Signalprozessor über den Mikrocomputer zugesandt werden.
